# EUROPEAN PATENT APPLICATION

(11) **EP 3 477 220 A1**
(43) Date of publication of application: **01.05.2019**
(21) Application number: 18194268.1
(22) Date of filing: 13.09.2018
(51) Int. Cl.: F24T 10/20, F24T 10/10

(54) **METHOD AND APPARATUS FOR REPURPOSING WELL SITES FOR GEOTHERMAL ENERGY PRODUCTION**

(30) Priority: 31.10.2017 US 201762579305 P
(71) Applicant: Eavor Technologies Inc., Calgary, Alberta T2P 3H9 (CA)
(72) Inventor: Redfern, John, Calgary, Alberta T2P 3H9 (CA)
(74) Representative: Patentanwälte Olbricht Buchhold Keulertz

(57) **Abstract**

A method and system for capturing geothermal energy. Injection and production well pairs in a geothermal zone are connected with a power generation apparatus between the production well of one well pair and the injection well of an adjacent well pair in a subterranean closed loop daisy chain configuration. Fluid circulated through the loop and the power generation apparatus recover subterranean heat energy. Specification is also disclosed in respect of application of the technology to repurpose an unused or suspended oilfield.

## Description

The present invention relates to a method and apparatus for repurposing well sites in an economical and environmentally responsible manner.

### BACKGROUND OF THE INVENTION

The benefits of geothermal energy are well known and have been the subject matter of many publications and patents. The general concept is to drill into a formation to extract heat therefrom and return the generated steam and water to the surface where the steam drives, for example, a power generating device. From an environmental point of view, this requires invasive operations which ultimately affect the landscape of an area scheduled for geothermal development.

Existing well sites have some commonality with geothermal sites, but offer preexistence in the landscape, a processed tract of land and wells. There are are a plethora of unused or suspended wells in Alberta which remain as such in view of the cleanup cost. It has been proposed, without effect or implementation, to capture geothermal heat from these wells.

In the realm of the prior art, proposals have been promulgated to assuage the issue. Geothermal energy has been considered and systems are being tested to assess the feasibility of exploiting the geothermal gradient. It has been discussed to use a series of tubes to be inserted in the ground for water within the tubes to absorb the heat and recirculate it to the surface and subsequently into a recovery device for use of the heat.

The geothermal gradient is generally defined as the rate of temperature increase relative to increasing depth in the interior of the Earth. Quantitatively, this represents approximately 25°C for
each kilometer. As such, this amount of energy is too substantive too leave unused. The union of this energy with the unused wells has resulted in renewed interest with the unused wells as evinced in the prior art.

Roussy, in United States Patent No. 8,132,631, issued March 13, 2012, teaches a geothermal loop installation where a sonic drill is provided for rotating and vibrating a drill string into the ground. Fluid is provided within the interior volume of the string. A geothermal transfer loop is positioned within the interior volume of the drill string and the drill string is removed from the ground.

Although useful in certain scenarios, the limitation with this arrangement relates to the confined interior volume of the drill string and further only a small area of the loop is exposed to a geothermal zone. This inherently limits efficient heat transfer.

United States Patent No. 8,375,716, issued February 19, 2013, to Ramaswamy et al. discloses an electrical generating power method and apparatus for sub-sea purposes and incorporates an organic Rankin
cycle positioned within a pressure vessel. This forms a series of connected vessels positioned adjacent, on or in the sea floor. Fluid is circulated through the vessels in order to generate mechanical shaft power which is subsequently converted to electrical power.

The interconnection of wells is recognized by Henderson, in United States Patent No. 3,941,422, issued March 2, 1976. In the teachings, two wells are drilled into the salt bed, with one being essentially vertically arranged and the drilled distally from the first well and deflected towards the first well in such a manner that the bottom of the deflected well approaches within a selected distance of the bottom of the first well. Subsequently, the salt is fractured by the use of the liquid fracturing technique in one or the other or both of the two wells, to enable fluid flow between the two wells. The salt is mined by fresh water injection with recovery of saturated salt solution from the other well.

It is clear that Henderson teaches paired wells generally connected, but the teachings do not contemplate an energy recovery or heat exchange system driven by geothermal energy.

WellStar Energy, in a press release dated December 1, 2016 briefly touches on the possibility of incorporating unused wells with a geothermal loop for energy recovery, however no specific details are mentioned in this regard or for interconnection of wells for thermal management.

Chevron, in an undated video disclosure, taught gas well interconnection at the Congo River Canyon Crossing Pipeline Project. An interconnecting pipeline was run from one side of the river to the other for supplying gas.Again, this was a specific use for well interconnection. Well recycle and interconnection in a geothermal loop was not discussed.

GreenFire Energy, in an article dated 2017, discuss a looped geothermal energy recovery system. Rather than using preexisting gas/oil wells for repurposing, new wells are drilled. This does nothing to control improperly maintained unused wells and in fact may contribute to new problems. The disclosure is silent on techniques used to effect the loop and further does not contemplate clustering and consolidation necessary for maximum efficiency.

Halff, in United States Patent No. 6,301,894, issued October 16,2001 teaches a general flash geothermal plant. The patent is focusssed on benefits related to generator location, water conservation and purity and efficiency with multiple loops. The Patentee indicates:
"The present invention overcomes these difficulties and has for one of its objects the provision of an improved geothermal power generation system in which the water obtaining heat from the hot rock strata does not become contaminated so that it can be recycled, does not require chemical treatment beyond that used in standard boiler water treatment, and is economical in the amount of water used. Another object of the present invention is the provision of an improved geothermal power generation system in which the turbine turning a generator or other mechanism that is to be powered by the steam needed not be located near the input well that is used to receive water into the ground and can be at a location remote from that well. Another object of the present invention is the provision of an improved geothermal power generation system in which the system is more efficient. Another object of the present invention is the provision of an improved geothermal power generation system in which the system is easy to install because the wells can be drilled by horizontal well drilling techniques in common use in the oil industry. The improved geothermal power generation system is simple to use. Another object of the present invention is that the system is maintained without withdrawing water from the strata so that the pressure in the strata is maintained."

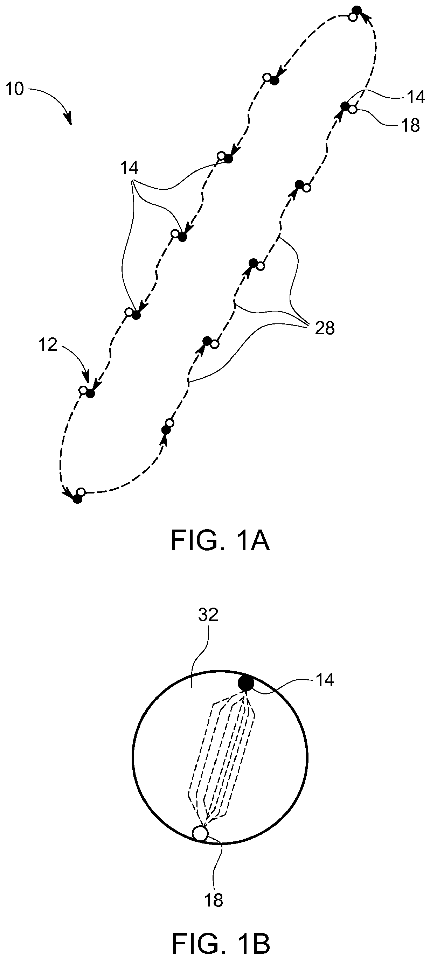

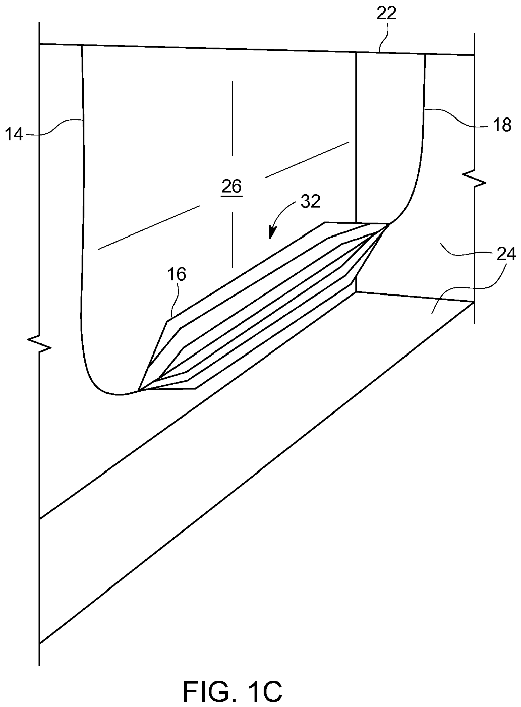

Halff,generally discusses multiple legs in the system, however no details are provided in this complex area. It is indicated in the text that:
"A variation of the system described above is shown Figure. All of the elements of the System shown in FIG. 1 are present. The same results are accomplished with a single vertical well and one or more horizontal wells. The water is returned to the horizontal reach of the well with a tubing that extends down the casing and discharges at the end of the casing. The water is converted to steam as it flows back out the single well and hence to the turbine.

In either embodiment, the treated water may be at either end of the hot water leg or distributed along all or part of the hot water leg.

In the drawing, it will be understood that there be one or more hot legs. The hot legs may all operate at the same time or they may be used in sequence with one hot leg in operation while the other legs are heating up until the other legs are ready and are sequentially put into service."

This over simplification does not address the fact that several new wells are required which adds cost and provides no instruction regarding the connection or thermal management of the multiple feed streams.

United States Patent Publication, 20110048005, McHargue, published March 3, 2001, provides variation in the production fluid choice to address temperature fluctuation within the formation. The text states:
"A novel aspect of this embodiment is the opportunity it affords to use a wide variety of potential fluids as the production fluid as well as the ability to rapidly and easily change production fluids as subterranean temperatures change or as conditions in the power plant change. The user has the option to use fluids or gasses other than water as production fluids in order to optimize the thermal properties of the production fluid to the local thermal conditions of the earth's subsurface, and the thermal requirements of the power plant. For example, one may choose to utilize supercritical fluids (U.S. Pat. No. 6,668,554 by D. W. Brown, 2003) or any hydrocarbon or refrigerant as the production fluid to feed a power plant. The potential to use fluids or gasses other than water as the production fluid will save money by providing the potential to drill cooler subterranean rocks at shallower depths where porosity and permeability are higher, and by reducing the need to artificially fracture the subterranean rock formations."

Although the publication alludes to techniques used in the petroleum industry, there is no discussion regarding repurposing of existing oilfields or use of existing wells.

Mickelson, in United States Patent Publication 20070245729, published October 25, 2007, teaches a multiple leg geothermal recovery system. The publication expresses a concern about geo-fluid loss and thus temperature loss and does not provide any teachings to mitigate the east-west problems associated with directional drilling, i.e. magnetic interference, fish, heavy iron concentration in the formation inter alia.

It would be most desirable to have a methodology and apparatus that efficiently unifies geothermal technology with existing oilfields in order to repurpose the wells of the field.

The present invention uniquely correlates the thermodynamic parameters requisite to efficiently recover geothermal energy, mitigate poorly maintained wells and produce power.

### SUMMARY OF THE INVENTION

One object of one embodiment of the present invention is to provide an improved method and apparatus suitable for improving the efficiency and economics of unused wells.

A further object of one embodiment of the present invention is to provide a geothermal method, comprising:
drilling a first generally U shaped bore hole into an earth formation and a second generally U shaped bore hole in spaced relation therefrom in a geothermal zone within the formation;
providing a power generation apparatus;
connecting the apparatus to an output of the first U shaped bore hole and an inlet of the second U shaped bore hole;
circulating a fluid through each bore hole; and
recovering heat from the fluid.

This circuit allows for waste heat to be more purposefully used as a
preheat treatment for the feed stream that is reinjected into the system.
This has energetic ramifications for power generation apparatus and
contributes to a reduction in capital expenditures.

A further object of one embodiment of the present invention is to provide a method of repurposing an oilfield having preexisting production wells and injection wells in spaced relation in a formation to capture heat energy, comprising:
providing a first node having a production well and a first injection well in fluid communication with a power generation apparatus;
providing a second node having a production well and a second injection well in fluid communication with a power generation apparatus in spaced relation to the first node;
connecting the first node and the second node in a subterranean horizontal connection; and
circulating heated output fluid from the power generation apparatus of the first node to an input of the power generation apparatus of the second node with a subterranean connection.

As a clear benefit, this technology provides an opportunity for well abandonment cost mitigation for the government and oil industry. In addition, since all horizontal segments of the wells are subterranean, the environmental impact is minimized.

The method of repurposing an oilfield having preexisting production wells and injection wells in spaced relation in a formation to capture heat energy, may further include the step of connecting a plurality of additional nodes, wherein said additional nodes are connected in a continuous loop formation.

It is also possible that the method includes connecting individual loops. Said individual loops may further be connected with a common power generation apparatus, and connected individual loops may also be connected in alternation with individual loops.

In addition to the above steps, the method of repurposing an oilfield having preexisting production wells and injection wells in spaced relation in a formation to capture heat energy, may include connecting said first node and said second node with a plurality of horizontal subterranean connections. Furthermore, the method can include connecting said additional nodes with a plurality of horizontal subterranean connection. According to the invention, it is also possible to connect said additional nodes with a plurality of horizontal subterranean connections in alternation with nodes connected with a single subterranean horizontal connection.

According to a further embodiment of the above method, a step of connecting nodes in said individual loops with a plurality of subterranean horizontal connections may be provided. Furthermore, maintaining said plurality of horizontal connections in spaced relation can be included in the method. The plurality of horizontal connections may be positioned in a generally annular formation.

It is also possible that the method includes a bypass connection on a power generation apparatus. Also, the method may further include positioning said bypass connection subterraneanly.

Yet another object of one embodiment of the present invention is to provide an energy production method, comprising:
providing a suspended or unused oilfield having injection and production well pairs;
connecting a power generation apparatus between the production well of one well pair and the injection well of an adjacent well pair in a subterranean loop; and
circulating a fluid through the loop to recover subterranean heat energy.

By the daisy chaining of wells, after a series of passes from one operation location to another, the inlet temperature will progressively increase at all power generation locations.

The energy production method according to this invention may further include connecting additional well pairs in a subterranean loop. It may also be intended that the method includes connecting loops in a subterranean connection. Bypassing said power generation apparatus may also be included according to the energy production method.

A further object of one embodiment of the present invention is to provide a system for energy production, comprising:
injection and production well pairs in a geothermal zone within a formation;
a power generation apparatus connected between the production well of one well pair and the injection well of an adjacent well pair forming a closed loop; and
fluid for circulation through said loop and said power generation apparatus to recover subterranean heat energy.

It may further be intended that said injection and production well pairs include a plurality of horizontal conduits, wherein said horizontal conduits may be arranged in an annular form and wherein said conduits may further be in spaced relation.

According to an embodiment of the above system, said power generation apparatus may comprise an organic Rankine cycle. Further, said power generation apparatus may comprise a carbon carrier cycle. According to an additional embodiment of the system, it is also possible that said power generation apparatus comprises a Kalina cycle.

Accordingly, yet another object of one embodiment of the present invention is to provide a geothermal location having a pair of wells, each having an injection well for receiving a heat recovery fluid and a production well and power generation means, the improvement comprising:
connecting the power generation means between the production well of one well pair and the injection well of an adjacent well pair in a closed loop for capturing heat recovered in the fluid.

According to the above improvement, a plurality of production wells and injection wells may be connected in the manner described above, wherein the connection may be a daisy chain connection. Furthermore, said loop may include a plurality of horizontal conduits and/or a plurality of discrete loops interconnected, wherein said loops may include alternating sections of a plurality of horizontal conduits.

In respect of immediate advantages attributable to the technology herein, the following are apparent:
A) The technology provides essentially zero cost exploration for lithium mining, oil and gas, conventional geothermal aquifers and distributed secondary heat sources
B) Accelerated ramp up as opposed to most geothermal systems, solar,wind, coal, nuclear and most gas plants:
C) Correlation of supply with demand for electric power.

This enumeration of advantages is illustrative as opposed to exhaustive.

Having thus generally described the invention, reference will now be made to the accompanying drawings.

### BRIEF DESCRIPTION OF THE DRAWINGS

Figure 1 is a top view of daisy chained wells in a first embodiment;
Figure 1A is an enlarged view of the multilateral arrangement of conduits employed in the arrangement;
Figure 1B is a view similar to Figure 1A illustrating the annular pattern of the conduits in the multilateral arrangement and the spaced relation between individual conduits.
Figure 2 is an enlarged view of the power generation apparatus as disposed between the inlet of one well and the output of an adjacent well;
Figure 3 is a top view of two daisy chained well loops integrated;
Figure 4 is a top view of another embodiment of the present invention; and
Figure 5 is a top view of yet another embodiment of the invention.

Similar numerals used in the Figures denote similar elements.

### DETAILED DESCRIPTION OF THE PREFERRED EMBODIMENTS

Referring now collectively to Figures 1, 1A and B shown is a schematic illustration of a daisy chain of wells, globally denoted by numeral 10. In this embodiment, each surface location, generally denoted by numeral 12, includes an injection well 14 connected to a lateral well conduit 16 and production well 18. In this manner, the continuous well structure subscribes to a generally U shaped structure, best referenced in Figure 1B.

As illustrated in Figure 1, each location 12 is discrete and linked to proximal locations in an elegant and advantageous manner. As an example, the distance between locations may be 3,500 meters. This will, of course, vary from one situation to another. Reference to Figure 1B delineates linkage specification.

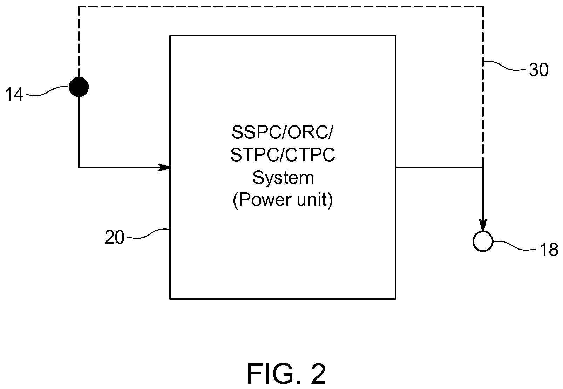

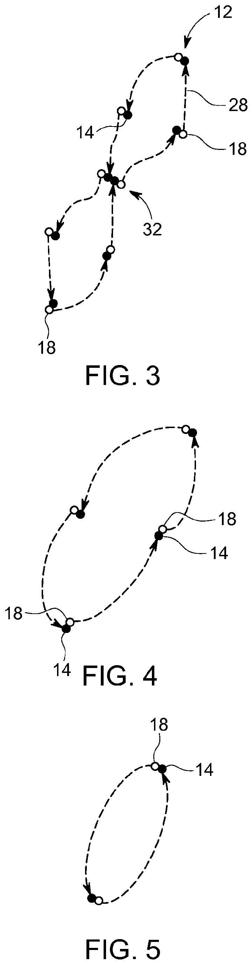

In Figure 2, numeral 20 is representative of the power generation apparatus. Selections for the apparatus 20 will be discussed herein after, however for purposes of discussion, the apparatus 20 is responsible for converting steam into electrical energy. At each location 12, there is the injection well 14 and production well 18. As illustrated in Figure 3, these are subterranean with the surface being denoted by numeral 22. The multilateral conduits 16 are similarly subterranean, but also within a geothermal zone 24 of formation 26.

For operation, Figure 2 may also be referenced. A fluid with a suitable heat capacity is circulated in the injection well 14 of one location 12, processed through power generation apparatus 20 to recover the heat energy and subsequently passed as an output stream to be an inlet feed stream for a injection well 14 of a proximal location. The chain line 28 illustrates this relay or daisy chain sequencing. Since not all of the heat is recovered, the inlet feed stream for well 14 of a proximal location is preheated for injection into lateral conduit 16. The process then resets for repetition in the next location 12. For convenience of repair, analysis, etc. power generation apparatus includes a bypass loop 30 for bypassing the apparatus 20.

In respect of power generation apparatus 20, without being limiting, the apparatus may comprise an organic Rankine cycle, Kalina cycle or carbon carrier cycle.

In order to accommodate variable conditions such geological, environmental, thermal, etc. an array of conduits 16 may be employed as illustrated in Figure 1A and 1B. The arrays will be referenced as multilateral arrays 32 and are arranged in an annular pattern in spaced relation from proximal conduits 16. Other patterns may be employed depending on the specifics of the situation. Connection between the individual conduits 16 of an array 32 will simply integrated in a merger acting in a similar fashion to a single conduit 16. All or some of the locations 12 may be fabricated in this way, depending on the conditions of which examples have been referenced above. It is further contemplated that singular conduit arrangements may alternate with arrays 32. The arrays 32 increase the overall flow rate and power production. In situations where some locations 12 are closer together, a greater number of arrays 32 may be used to maintain heat recovery balance. The arrangement shown in Figure 1 is exemplary of a 12,000 kW to 20,000 kW system.

Turning now to Figure 3, shown is a further embodiment of the invention for example, a 8,000kW to 12,00kW system. In this example, individual loops may be joined at a centralized location, C, in order to centralize the power generation apparatus 20 (not shown) for increased power an efficiency.

Figures 4 and 5 illustrate smaller scale operations, 4,000kW-6,000kW (Figure 4) and 2,000kW - 3,000kW (Figure 5).

One of the significant features of employing the daisy chain implementation is the lack of a requirement for a near surface return conduit. When required, as in conventional well loop arrangements, capital costs exceed 10%, there may be a need to negotiate rights of way and a 3-5 C heat loss and a pressure loss results causing equipment issues.

Geothermal loops have been proposed ostensibly in the prior art discussed supra, however, in mosaic, the prior art has not provided adequate guidance in terms of the surface to surface energy recovery, minimal geological invasiveness unified with consolidated recycling.

As noted in the prior art, the Halff reference, supra, broadly relates to loop systems, but does not appear to present an economically viable solution. This is evinced by the fact that there has been no implementation of the Halff technology, despite the nearly two decades that have elapsed since its disclosure. Following this, the Mickelson and McHargue ,supra, were released, building on the concepts in this area. Neither of these technologies came to fruition and were abandoned. Clearly, this area of technology is complex and cumulative teachings, although many times instructive, singularly or in mosaic, do not direct to linked loops, preheated streams from waste heat, truncated horizontal conduit circuits or subterranean closed loop systems.

By contrast, the daisy chaining, since well loops are linked front to back, eliminates the need for a near surface return conduit. Further, the paired loops act as the return conduit for each other with the pair using waste heat as an input to create the preheated stream supra.

Other advantages include increased power production with no surface disruption(footprint )since everything is subsurface and reduced distance between locations 12. This commensurately reduces cost if shorter conduit 16 can be used owing to the increased temperature of the preheated feed stream design.

## Claims

1. A geothermal method, comprising:
drilling a first generally U shaped bore hole into an earth formation and a second generally U shaped bore hole in spaced relation therefrom each in a geothermal zone within said formation;
providing a power generation apparatus;
connecting said apparatus to an output of said first U shaped bore hole and an inlet of said second U shaped bore hole;
circulating a fluid through each said bore hole; and
recovering heat from said fluid.

2. The method as set forth in claim 1, wherein said earth formation is an oilfield.

3. The method a set forth in claim 1or 2 , further including the step of recovering heat from said output of said first U shaped bore hole with said apparatus prior to introduction into said inlet of said second U shaped bore hole.

4. The method as set forth in any one of claims 1 through 3, further including the step of optionally bypassing said power generation apparatus.

5. The method as set forth in any one of claims 1 through 4, further including the step of connecting a series of first and second U shaped bore holes and power generation apparatus in a looped configuration.

6. The method as set forth in claim 5, further including connecting discrete loops.

7. The method as set forth in any one of claims 2 through 6 , wherein preexisting adjacent oil wells in said oilfield having an injection well and a production well are retrofitted for connection with said apparatus within a geothermal zone for heat recovery.

8. The method as set forth in claim 7, further including the step of drilling additional U shaped wells for connection with said preexisting wells.

9. A method of repurposing an oilfield having preexisting production wells and injection wells in spaced relation in a formation to capture heat energy, comprising:
providing a first node having a production well and a first injection well in fluid communication with a power generation apparatus;
providing a second node having a production well and a second injection well in fluid communication with a power generation apparatus in spaced relation to said first node; connecting said first node and said second node in a subterranean horizontal connection; and
circulating heated output fluid from said power generation apparatus of said first node to an input of said power generation apparatus of said second node with a subterranean connection.

10. An energy production method comprising:
providing a suspended oilfield having injection and production well pairs; connecting a power generation apparatus between the production well of one well pair and the injection well of an adjacent well pair in a subterranean loop; and circulating a fluid through said loop to recover subterranean heat energy.

11. A system for energy production, comprising:
injection and production well pairs in a geothermal zone within a formation; a power generation apparatus connected between the production well of one well pair and the injection well of an adjacent well pair forming a closed loop; and fluid for circulation through said loop and said power generation apparatus to recover subterranean heat energy.

12. The system as set forth in claim 11, wherein said formation is an oilfield.

13. In a geothermal location having a pair of wells, each having an injection well for receiving a heat recovery fluid and a production well and power generation means, the improvement comprising:
connecting said power generation means between the production well of one well pair and the injection well of an adjacent well pair in a closed loop for capturing heat recovered in said fluid.

14. The improvement as set forth in claim 13, wherein said geothermal location is a geothermal field.

15. The improvement as set forth in claim 14, wherein said geothermal location is an oilfield.
